# EUROPEAN PATENT APPLICATION

(11) **EP 4 617 082 A1**
(43) Date of publication of application: **17.09.2025**
(21) Application number: 25159177.2
(22) Date of filing: 20.02.2025
(51) Int. Cl.: B60C 19/00, B60C 9/04, B60C 13/00, G06K 19/077, H01Q 1/22

(54) **HEAVY DUTY TIRE**

(30) Priority: 06.03.2024 JP 2024033667
(71) Applicant: Sumitomo Rubber Industries, Ltd., Kobe-shi, Hyogo 651-0072 (JP)
(72) Inventor: YOSHINO, Masayuki, Kobe-shi, 651-0072 (JP); YAMAMOTO, Keishi, Kobe-shi, 651-0072 (JP)
(74) Representative: Manitz Finsterwald Patent- und Rechtsanwaltspartnerschaft mbB

(57) **Abstract**

A heavy duty tire 2 includes a tread, a pair of sidewalls, a pair of beads, a carcass, a belt, a pair of chafers, and a tag member including an RFID tag. The bead of the tire 2 includes a core and an apex. In the tire 2, the carcass includes a carcass ply including carcass cords, and the carcass cords are formed from an organic fiber. The carcass ply includes a ply body extending between the pair of beads and a pair of turned-up portions each connected to the ply body and turned up around the bead. In a standard ground-contact state where a load that is 50% of a standardized load is applied to the tire 2 in a standardized state and the tire 2 is brought into contact with a flat surface, an end of the turned-up portion is located axially inward of an axially outer end of a rim, and the RFID tag is located axially outward of the axially outer end of the rim and is located radially outward of a radially outer end of the rim. In the tire 2, an angle formed between a length direction of the RFID tag and the carcass cord is not less than 80 degrees and not greater than 90 degrees.

## Description

### BACKGROUND OF THE INVENTION

### Field of the Invention

The present invention relates to a heavy duty tire.

### Background Art

In order to manage data regarding manufacturing management, customer information, running history, etc., of tires, tires on which radio frequency identification (RFID) tags that perform reading and writing via radio waves are mounted, have been proposed. Various studies have been conducted for a technology to mount an RFID tag to a tire (for example, Japanese Laid-Open Patent Publication No. 2021-046057).

Japanese Laid-Open Patent Publication No. 2021-046057 proposes a technology to mount an RFID tag to a heavy duty tire used for a truck or a bus.

Meanwhile, steel cords are generally adopted as tire cords, such as carcass cords, in heavy duty tires used for trucks and buses.

In the case where an RFID tag is mounted to a tire in which steel cords are adopted as carcass cords, the steel cords become a barrier to radio waves, so that reading of data from the RFID tag is easily impeded.

An object of the present invention is to provide a heavy duty tire having good performance in reading data from an RFID tag and good durability.

In the present invention, good durability of the tire means that the tire has a long runnable distance and the RFID tag is less likely to be damaged.

### SUMMARY OF THE INVENTION

A heavy duty tire according to one aspect of the present invention includes:
a tread;
a pair of sidewalls each connected to an end of the tread and located radially inward of the tread;
a pair of beads each located radially inward of the sidewall;
a carcass located inward of the tread and the pair of sidewalls and extending on and between one bead and the other bead;
a belt stacked on the carcass on a radially inner side of the tread;
a pair of chafers each located radially inward of the sidewall and configured to come into contact with a rim; and
a tag member including an RFID tag, wherein
the bead includes a core and an apex located radially outward of the core,
the carcass includes a carcass ply including a plurality of carcass cords aligned with each other,
the carcass cords are formed from an organic fiber,
the carcass ply includes a ply body extending between the pair of beads and a pair of turned-up portions each connected to the ply body and turned up around the bead,
the rim is a standardized rim,
a state where the tire is fitted on the rim and an internal pressure of the tire is adjusted to a standardized internal pressure is a standardized state,
a state where a load that is 50% of the standardized load is applied to the tire in the standardized state and the tire is brought into contact with a flat surface is a standard ground-contact state,
in the standard ground-contact state, an end of the turned-up portion is located inward of an axially outer end of the rim in an axial direction,
in the standard ground-contact state, the RFID tag is located outward of the axially outer end of the rim in the axial direction and is located outward of a radially outer end of the rim in a radial direction, and
an angle formed between a length direction of the RFID tag and the carcass cord is not less than 80 degrees and not greater than 90 degrees.

According to the present invention, it is possible to provide a heavy duty tire having good performance in reading data from an RFID tag and good durability.

### BRIEF DESCRIPTION OF THE DRAWINGS

FIG. 1 is a cross-sectional view showing a part of a heavy duty tire according to one embodiment of the present invention;
FIG. 2 is a cross-sectional view showing a part of the heavy duty tire in FIG. 1;
FIG. 3 is a plan view of a tag member;
FIG. 4 is a cross-sectional view taken along a line IV-IV in FIG. 3;
FIG. 5 is a cross-sectional view showing a part of the heavy duty tire in a ground-contact state;
FIG. 6 illustrates an angle formed between the length direction of an RFID tag and a carcass cord; and
FIG. 7 is a cross-sectional view showing a part of a heavy duty tire according to another embodiment of the present invention.

### DETAILED DESCRIPTION

The tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a crosslinked rubber is a molded product obtained by pressurizing and heating a rubber composition. The crosslinked rubber is a crosslinked product of the rubber composition. The rubber composition is a material obtained by mixing a base rubber and chemicals in a kneading machine such as a Banbury mixer. The base rubber of the rubber composition is not crosslinked. The base rubber of the crosslinked rubber is crosslinked. The crosslinked rubber is also referred to as vulcanized rubber, and the rubber composition is also referred to as unvulcanized rubber.

Examples of the base rubber include natural rubber (NR), butadiene rubber (BR), styrene-butadiene rubber (SBR), isoprene rubber (IR), ethylene-propylene rubber (EPDM), chloroprene rubber (CR), acrylonitrile-butadiene rubber (NBR), and isobutylene-isoprene-rubber (IIR). Examples of the chemicals include reinforcing agents such as carbon black and silica, plasticizers such as aromatic oil, fillers such as zinc oxide, lubricants such as stearic acid, antioxidants, processing aids, sulfur, and vulcanization accelerators. Selection of a base rubber and chemicals, the amounts of the selected chemicals, etc., are determined as appropriate according to the specifications of components, such as a tread and a sidewall, for which the rubber composition is used.

In the present invention, a tire includes a tread portion, a pair of bead portions, and a pair of sidewall portions as portions thereof. The tread portion is a portion of the tire that comes into contact with a road surface. Each bead portion is a portion of the tire that is fitted to a rim. Each sidewall portion is a portion of the tire that extends between the tread portion and the bead portion.

In the present invention, a complex elastic modulus of a component formed from a crosslinked rubber, of the components included in the tire, is measured according to the standards of JIS K6394. The measurement conditions are as follows.
Initial strain = 10%
Dynamic strain = ±1%
Frequency = 10 Hz
Mode = stretch mode
Temperature = 70°C

In this measurement, a test piece (a length of 40 mm × a width of 4 mm × a thickness of 1 mm) is sampled from the tire. The length direction of the test piece is caused to coincide with the circumferential direction of the tire. When a test piece cannot be sampled from the tire, a test piece is sampled from a sheet-shaped crosslinked rubber (hereinafter, also referred to as rubber sheet) obtained by pressurizing and heating a rubber composition, which is used for forming the component to be measured, at a temperature of 170°C for 12 minutes.

In the present invention, the complex elastic modulus is represented as a complex elastic modulus at 70°C.

### [Findings on Which Present Invention Is Based]

In the case where an RFID tag is mounted to a heavy duty tire, the RFID tag is generally embedded in a bead portion.

Heavy duty tires used for trucks and buses are generally so-called all-steel tires in which steel cords are used as a reinforcing material for both a carcass and a belt due to the conditions of use. The amount of steel (metal) in an all-steel tire is large, so that there is a problem that the exchange of radio waves by an RFID tag mounted on the all-steel tire is likely to be impeded by the metal and the all-steel tire has poor reading performance.

In the case where a heavy duty tire on which an RFID tag is mounted is mounted on a vehicle, there is a problem that, depending on the mounting position of the RFID tag on the tire, the exchange of radio waves may be impeded by a metal rim such as an aluminum wheel, and as a result, the reading operation may become difficult.

Regarding solutions to these problems, for the latter problem, it is possible to consider mounting the RFID tag at a position away from the metal wheel, which can solve the problem.

Meanwhile, for the former problem, it is possible to consider replacing cords made of steel (hereinafter referred to as steel cords) with cords made of an organic fiber (hereinafter referred to as organic fiber cords). However, in the case where organic fiber cords are used as carcass cords instead of steel cords, the strain in the vicinity of an end of each turned-up portion of a carcass tends to become larger, thereby causing a new problem that the durability of a heavy duty tire is likely to be reduced.

Therefore, the present inventors have examined means for ensuring good reading performance of an RFID tag without impairing the durability of a heavy duty tire.

As a result, the present inventors have found that it is possible to ensure good reading performance of an RFID tag without impairing the durability of a heavy duty tire, by mounting a tag member including the RFID tag to the tire at a predetermined position in a predetermined orientation, adopting organic fiber cords as carcass cords, and providing a carcass such that an end of a turned-up portion of a carcass ply is at a predetermined position, and thus have completed the invention described below.

### [Details of Embodiments of Present Invention]

Hereinafter, the present invention will be described in detail based on preferred embodiments with appropriate reference to the drawings.

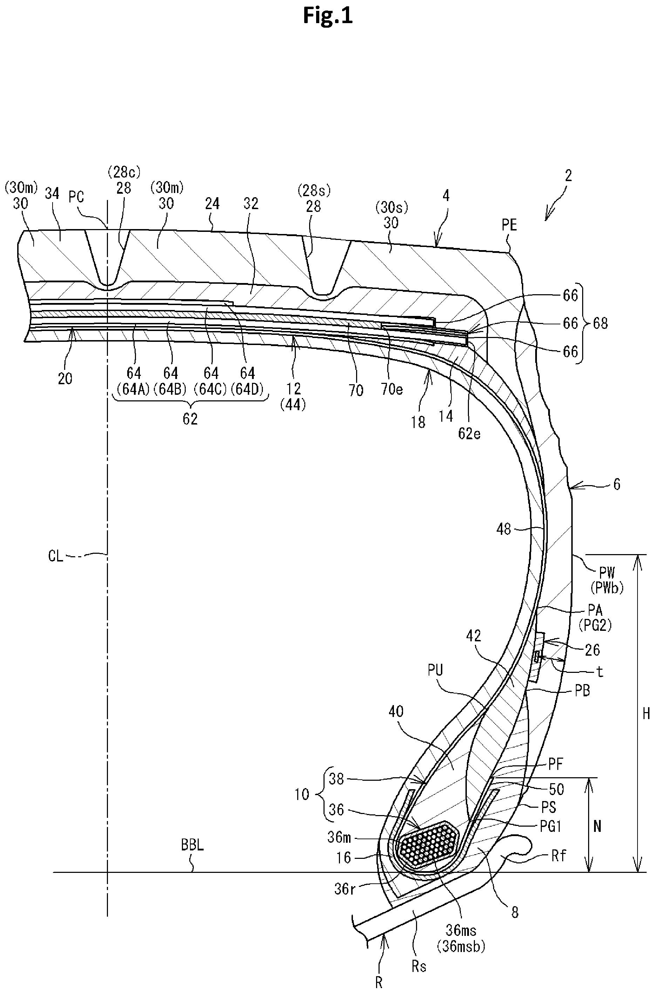

FIG. 1 shows a part of a heavy duty tire 2 (hereinafter also referred to simply as "tire 2"), according to one embodiment of the present invention. The tire 2 is mounted to a vehicle such as a truck or a bus.

In FIG. 1, the tire 2 is fitted on a rim R (standardized rim).

FIG. 1 shows a part of a cross-section (hereinafter referred to as meridian cross-section) of the tire 2 along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2.

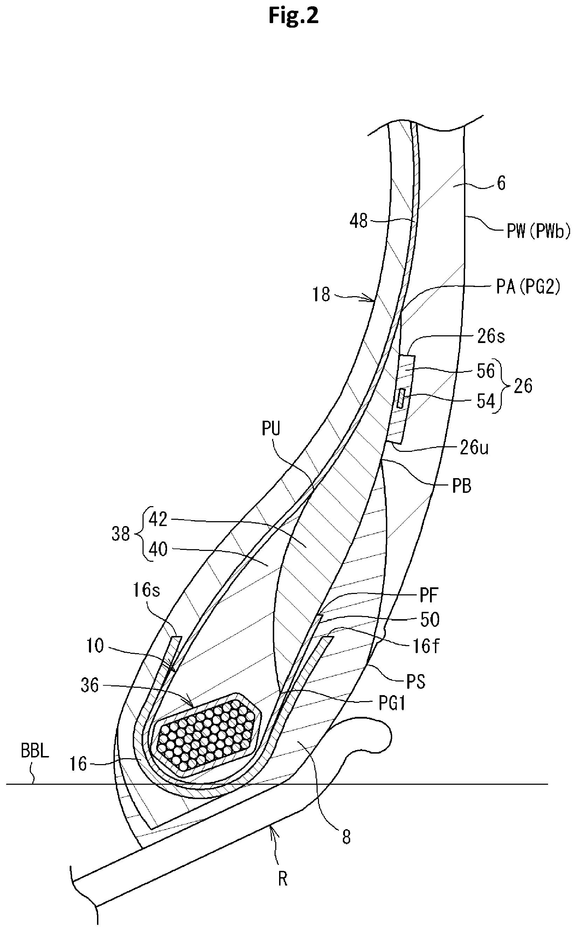

FIG. 2 shows a part of the cross-section shown in FIG. 1.

In FIG. 1, an alternate long and short dash line CL extending in the radial direction represents the equator plane of the tire 2. In FIG. 1 and FIG. 2, a solid line BBL extending in the axial direction is a bead base line. The bead base line BBL is a line that defines the rim diameter (see JATMA or the like) of the rim R.

The tire 2 includes a tread 4, a pair of sidewalls 6, a pair of chafers 8, a pair of beads 10, a carcass 12, a pair of cushion layers 14, a pair of steel fillers 16, an inner liner 18, a reinforcing layer 20, and a tag member 26.

The tread 4 is located radially outward of the carcass 12. The tread 4 comes into contact with a road surface at a tread surface 24 thereof. At least three circumferential grooves 28 are formed on the tread 4. Accordingly, at least four land portions 30 are formed in the tread 4.

On the tread 4 of the tire 2 shown in FIG. 1, three circumferential grooves 28 are formed, whereby four land portions 30 are formed therein. These land portions 30 are aligned in the axial direction and extend continuously in the circumferential direction.

Among the three circumferential grooves 28 formed on the tread 4, the circumferential groove 28 located on each outer side in the axial direction is a shoulder circumferential groove 28s. The circumferential groove 28 sandwiched between two shoulder circumferential grooves 28s in the axial direction and located on the equator plane CL is a center circumferential groove 28c. In the tire 2, the three circumferential grooves 28 are composed of such a center circumferential groove 28c and a pair of such shoulder circumferential grooves 28s.

Among the four land portions 30 formed in the tread 4, the land portion 30 located on each outer side in the axial direction is a shoulder land portion 30s. The shoulder land portion 30s is located outward of the shoulder circumferential groove 28s in the axial direction and includes an end PE of the tread surface 24. The land portion 30 located inward of the shoulder land portion 30s in the axial direction is a middle land portion 30m. The middle land portion 30m is located between the center circumferential groove 28c and the shoulder circumferential groove 28s in the axial direction. In the tire 2, the four land portions 30 are composed of a pair of such middle land portions 30m and a pair of such shoulder land portions 30s.

The tread 4 includes a base portion 32 and a cap portion 34 located radially outward of the base portion 32. The base portion 32 is formed from a crosslinked rubber that has low heat generation properties. The cap portion 34 is formed from a crosslinked rubber for which wear resistance and grip performance are taken into consideration. As shown in FIG. 1, the base portion 32 covers the entire reinforcing layer 20. The cap portion 34 covers the entire base portion 32. The cap portion 34 includes the tread surface 24.

In FIG. 1, a position indicated by reference character PC corresponds to an equator. The equator PC is the point of intersection of the tread surface 24 and the equator plane CL. In the case where the groove 28 is located on the equator plane CL as in the tire 2, the equator PC is specified on the basis of a virtual tread surface obtained on the assumption that the groove 28 is not present thereon.

The distance in the radial direction, from the bead base line BBL to the equator PC, obtained in the tire 2 in the standardized state is the cross-sectional height (see JATMA or the like) of the tire 2.

Each sidewall 6 is connected to an end of the tread 4. The sidewall 6 is located radially inward of the tread 4. The sidewall 6 is located axially outward of the carcass 12. A position indicated by reference character PS is an inner end of the sidewall 6.

The sidewall 6 is formed from a crosslinked rubber for which cut resistance is taken into consideration. The complex elastic modulus of the sidewall 6 is not less than 2.0 MPa and not greater than 6.0 MPa.

A position indicated by reference character PW is an axially outer end of the tire 2 (hereinafter referred to as outer end PW). In the case where decorations such as patterns and letters are present on the outer surface of the tire 2, the outer end PW is specified on the basis of a virtual outer surface obtained on the assumption that the decorations are not present thereon. The tire 2 has a maximum width at the outer end PW. The outer end PW is also referred to as maximum width position.

In the present invention, the maximum width position PW in the tire 2 in the standardized state is a reference maximum width position PWb. The distance in the axial direction from one reference maximum width position PWb to another reference maximum width position PWb (not shown) is the cross-sectional width (see JATMA or the like) of the tire 2.

In FIG. 1, a length indicated by reference character H is the distance in the radial direction from the bead base line BBL to the reference maximum width position PWb. The distance H in the radial direction is also referred to as radial height of the reference maximum width position PWb.

In the tire 2 in the standardized state, the ratio of the radial height H of the reference maximum width position PWb to the cross-sectional height is not less than 0.40 and not greater than 0.60.

Each chafer 8 is located radially inward of the sidewall 6. The chafer 8 comes into contact with the rim R. A position indicated by reference character PB is an outer end of the chafer 8.

The chafer 8 is formed from a crosslinked rubber for which wear resistance is taken into consideration. The complex elastic modulus of the chafer 8 is not less than 10 MPa and not greater than 15 MPa. The chafer 8 is harder than the sidewall 6.

Each bead 10 is located axially inward of the chafer 8. The bead 10 is located radially inward of the sidewall 6. The bead 10 includes a core 36 and an apex 38.

The core 36 extends in the circumferential direction. The core 36 includes a core body 36m and a wrapping layer 36r.

The core body 36m is a ring extending in the circumferential direction. The core body 36m includes a wire made of steel and wound in the circumferential direction. A cross-sectional shape of the core body 36m is shaped by winding the wire in a regular manner. Accordingly, in a cross-section of the core body 36m, cross-sectional units each including a plurality of wire cross-sections aligned substantially in the axial direction are stacked in a plurality of stages substantially in the radial direction. The cross-sectional shape of the core body 36m is represented by a line that circumscribes the core body 36m. As shown in FIG. 1, the core body 36m has a hexagonal cross-sectional shape. The core body 36m may have a quadrangular cross-sectional shape.

The core body 36m generally has six side surfaces 36ms. As shown in FIG. 1, one side surface 36msb out of the six side surfaces 36ms is located so as to face a seat Rs of the rim R. In the present embodiment, the side surface 36msb which is located so as to face the seat Rs of the rim R is a bottom surface of the core body 36m. The core body 36m has the bottom surface 36msb which is located so as to face the seat Rs of the rim R. In the meridian cross-section of the tire 2, the contour of the bottom surface 36msb is represented by a straight line.

The wrapping layer 36r surrounds the core body 36m. The wrapping layer 36r covers the core body 36m. The wrapping layer 36r prevents the core body 36m from falling apart.

The configuration of the wrapping layer 36r is not particularly limited as long as the wrapping layer 36r can prevent the core body 36m from falling apart. The wrapping layer 36r is composed of a cord helically wound around the core body 36m, a rubberized fabric wrapped around the core body 36m, or the like.

The apex 38 is located radially outward of the core 36. The apex 38 extends radially outward from the core 36. The apex 38 is tapered outward. An outer end PA of the apex 38 is located radially outward of the outer end PB of the chafer 8.

The apex 38 includes an inner apex 40 and an outer apex 42. The inner apex 40 is located radially outward of the core 36. The outer apex 42 is located radially outward of the inner apex 40.

The inner apex 40 is tapered outward. The inner apex 40 is formed from a hard crosslinked rubber. The complex elastic modulus of the inner apex 40 is not less than 60 MPa and not greater than 90 MPa.

The outer apex 42 is thick around an outer end PU of the inner apex 40. The outer apex 42 is tapered inward and tapered outward from the thick portion thereof.

An inner end PG1 of the outer apex 42 is located near the core 36. An outer end PG2 of the outer apex 42 is also the outer end PA of the apex 38.

The outer apex 42 is formed from a crosslinked rubber. The outer apex 42 is softer than the inner apex 40. The complex elastic modulus of the outer apex 42 is not less than 3.0 MPa and not greater than 6.0 MPa.

The carcass 12 is located inward of the tread 4, the pair of sidewalls 6, and the pair of chafers 8. The carcass 12 extends on and between the pair of beads 10. The carcass 12 of the tire 2 has a radial structure.

The carcass 12 includes at least one carcass ply 44. The carcass 12 of the tire 2 is composed of one carcass ply 44. The carcass ply 44 is turned up around each bead 10.

The carcass ply 44 includes a ply body 48 and a pair of turned-up portions 50. The ply body 48 extends between the pair of beads 10, that is, between one bead 10 and the other bead 10 (not shown). Each turned-up portion 50 is connected to the ply body 48 and turned up around the bead 10. The turned-up portion 50 of the tire 2 is turned up around the bead 10 from the inner side toward the outer side in the axial direction. The turned-up portion 50 is turned up such that an end PF of the turned-up portion 50 is located axially outward of the apex 38.

In the tire 2 according to the present embodiment, the end PF of the turned-up portion 50 is at a predetermined position. The specific position will be described later.

In the tire 2, each bead 10 is interposed between the ply body 48 and the turned-up portion 50.

The carcass ply 44 includes a large number of carcass cords aligned with each other, which are not shown in FIGS. 1 and 2. These carcass cords are covered with a topping rubber. Each carcass cord intersects the equator plane CL. The material of the carcass cord is an organic fiber. The carcass cord is an organic fiber cord. Examples of the organic fiber include nylon fibers, polyester fibers, rayon fibers, and aramid fibers.

In the tire 2, since the carcass cords are organic fiber cords, blocking of radio waves, exchanged by an RFID tag 54, by the carcass cords is suppressed.

As the organic fiber cords, cords made of an aramid fiber (hereinafter referred to as "aramid cords") are preferable from the viewpoint of having durability and heat resistance similar to steel cords.

The aramid fiber that is the material of the aramid cords is preferably a para-aramid fiber. Therefore, as the carcass cords adopted in the tire 2, cords made of a para-aramid fiber (hereinafter referred to as "para-aramid cords") are preferable.

In FIG. 1, a length indicated by reference character N is the distance in the radial direction from the bead base line BBL to the end PF of the turned-up portion 50. The distance N in the radial direction is also referred to as radial height of the end PF of the turned-up portion 50.

In the tire 2, the ratio (N/H) of the radial height N of the end PF of the turned-up portion 50 to the radial height H of the reference maximum width position PWb is not less than 0.20 and not greater than 0.40.

Each cushion layer 14 is located between the reinforcing layer 20 and the carcass 12 at an end of the reinforcing layer 20. The cushion layer 14 is formed from a soft crosslinked rubber.

Each steel filler 16 is located at a bead portion. The steel filler 16 is turned up from the inner side toward the outer side in the axial direction around each core 36 along the carcass ply 44. The steel filler 16 is placed so as to wrap a radially inner portion of the bead 10 from the radially inner side of the turned-up portion 50.

The steel filler 16 includes a large number of filler cords aligned with each other, which are not shown. The material of the filler cords is steel. The steel filler 16 includes steel cords. In the steel filler 16, the steel cords are covered with a topping rubber.

An outer end 16f of the steel filler 16 is located axially outward of the turned-up portion 50. The outer end 16f is located radially inward of the end PF of the turned-up portion 50. An inner end 16s of the steel filler 16 is located axially inward of the ply body 48. The position in the radial direction of the inner end 16s only needs to substantially coincide with that of the outer end 16f, and the inner end 16s may be located radially outward of the outer end 16f or may be located radially inward of the outer end 16f.

The inner liner 18 is located inward of the carcass 12. The inner liner 18 is joined to the inner surface of the carcass 12 via an insulation (not shown) formed from a crosslinked rubber. The inner liner 18 forms an inner surface of the tire 2. The inner liner 18 is formed from a crosslinked rubber that has an excellent air blocking property.

The reinforcing layer 20 is located inward of the tread 4 in the radial direction. The reinforcing layer 20 is located between the carcass 12 and the tread 4. The reinforcing layer 20 includes a belt 62 and a band 70. The stiffness of a tread portion is increased by the reinforcing layer 20.

The belt 62 includes a plurality of belt plies 64 aligned in the radial direction. Each belt ply 64 is placed such that both ends thereof are opposed to each other across the equator plane CL. The belt 62 of the tire 2 includes four belt plies 64. The four belt plies 64 include a first belt ply 64A located on the inner side in the radial direction, a second belt ply 64B located outward of the first belt ply 64A, a third belt ply 64C located outward of the second belt ply 64B, and a fourth belt ply 64D located outward of the third belt ply 64C.

In the tire 2, the second belt ply 64B has a widest width in the axial direction, and the fourth belt ply 64D has a narrowest width in the axial direction. The first belt ply 64A and the third belt ply 64C have the same width in the axial direction, or the width in the axial direction of the first belt ply 64A is wider than the width in the axial direction of the third belt ply 64C.

An end 62e of the belt 62 of the tire 2 is represented as an end of the belt ply 64 having a widest width in the axial direction among the plurality of belt plies 64 included in the belt 62. In the tire 2, as described above, among the four belt plies 64 included in the belt 62, the second belt ply 64B has a widest width in the axial direction. The end 62e of the belt 62 of the tire 2 is represented as an end of the second belt ply 64B having a widest width in the axial direction.

As shown in FIG. 1, an end of the first belt ply 64A, the end of the second belt ply 64B, and an end of the third belt ply 64C are located outward of the shoulder circumferential groove 28s in the axial direction. An end of the fourth belt ply 64D is located inward of the shoulder circumferential groove 28s in the axial direction.

In the tire 2, each belt ply 64 included in the belt 62 includes a large number of belt cords aligned with each other. The belt cords are covered with a topping rubber. The belt cords of the tire 2 are steel cords.

In the tire 2, the density of the belt cords in each belt ply 64 is not less than 15 ends/5 cm and not greater than 30 ends/5 cm. The density of the belt cords is represented as the number of cross-sections of the belt cords included per 5 cm width of the belt ply 64 in a cross-section of the belt ply 64 along a plane perpendicular to the direction in which the belt cords extend.

In each belt ply 64, the belt cords are inclined with respect to the circumferential direction. In the tire 2, as the direction of inclination of the belt cords included in each belt ply 64 with respect to the circumferential direction (hereinafter referred to as inclination direction of the belt cords), any direction can be selected independently for each belt ply 64. In the tire 2, from the viewpoint of ensuring a stable ground-contact shape, it is preferable that the inclination direction of the belt cords of the second belt ply 64B is opposite to the inclination direction of the belt cords of the third belt ply 64C.

The inclination angle of the belt cords included in each belt ply 64 with respect to the circumferential direction is appropriately selected within a range of not less than 10 degrees and not greater than 60 degrees, for example.

The band 70 has two ends 70e opposed to each other across the equator plane CL. The band 70 includes a helically wound band cord. The band cord is covered with a topping rubber.

In the tire 2, the band cord is a steel cord or an organic fiber cord. Examples of the material of the organic fiber cord include nylon fibers, polyester fibers, rayon fibers, and aramid fibers.

The band cord is preferably a steel cord.

As described above, the band 70 includes the helically wound band cord. The band 70 has a jointless structure. In the band 70, an angle of the band cord with respect to the circumferential direction of the tire 2 is preferably not greater than 5 degrees and more preferably not greater than 2 degrees. The band cord of the band 70 extends substantially in the circumferential direction.

The density of the band cord in the band 70 is not less than 20 ends/5 cm and not greater than 35 ends/5 cm. The density of the band cord is represented as the number of cross-sections of the band cord included per 5 cm width of the band 70 in a cross-section of the band 70 along a plane perpendicular to the direction in which the band cord extends.

In the tire 2, each of the end of the second belt ply 64B and the end of the third belt ply 64C is covered with a rubber layer 66. Between the end of the second belt ply 64B and the end of the third belt ply 64C each covered with the rubber layer 66, two rubber layers 66 are further placed. In the tire 2, an edge member 68 composed of a total of four rubber layers 66 is formed between the end of the second belt ply 64B and the end of the third belt ply 64C. The edge member 68 is formed from a crosslinked rubber. The edge member 68 contributes to maintaining the interval between the end of the second belt ply 64B and the end of the third belt ply 64C. In the tire 2, a change in the positional relationship between the end of the second belt ply 64B and the end of the third belt ply 64C due to running is suppressed. The edge member 68 is a part of the reinforcing layer 20. The reinforcing layer 20 of the tire 2 includes a pair of such edge members 68 in addition to the belt 62 and the band 70.

As described above, the band 70 has the two ends 70e opposed to each other across the equator plane CL. The band 70 extends in the axial direction from the equator plane CL toward each end 70e. Each end 70e of the band 70 is located outward of the shoulder circumferential groove 28s in the axial direction. In the radial direction, the band 70 is located inward of each shoulder circumferential groove 28s.

In the tire 2, the band 70 suppresses growth of the carcass 12 due to running and suppresses a shape change of the tire 2. Therefore, an increase in strain in the vicinity of the end PF of each turned-up portion 50 of the carcass 12 during running can be suppressed. Therefore, the durability of the tire 2 is better than that of a tire in which no band 70 is provided.

In the tire 2, each end 70e of the band 70 is located inward of the end 62e of the belt 62 in the axial direction. The belt 62 is wider than the band 70. The belt 62 constrains each end 70e of the band 70. The belt 62 contributes to suppressing fluctuation of the tension of the band cord included in the band 70. Occurrence of a break of the band cord due to tension fluctuation is suppressed, so that the band 70 can stably exhibit the function of suppressing a shape change. From this viewpoint, it is preferable that each end 70e of the band 70 is located inward of the end 62e of the belt 62 in the axial direction.

A force acts on the band 70 of the tire 2 so as to spread from the inner side toward the outer side in the radial direction. This force causes tension in the band cord of the band 70.

In the tire 2, in the radial direction, the second belt ply 64B is located inward of the band 70, and the third belt ply 64C is located outward of the band 70. In the tire 2, the band 70 is interposed between the second belt ply 64B and the third belt ply 64C. The second belt ply 64B is wider than the band 70. The third belt ply 64C is also wider than the band 70. The plurality of belt plies 64 included in the belt 62 of the tire 2 include two belt plies 64 having a width wider than the width of the band 70, and the band 70 is interposed between these belt plies 64 having a wide width. In the tire 2, fluctuation of the tension of the band cord included in the band 70 is more effectively suppressed, so that a break is less likely to occur in the band cord of the band 70. The band 70 of the tire 2 can stably exhibit the function of suppressing a shape change. From this viewpoint, in the tire 2, it is preferable that the plurality of belt plies 64 included in the belt 62 include two belt plies 64 having a width wider than the width of the band 70, and the band 70 is interposed between these belt plies 64 having a wide width.

In the tire 2, the first belt ply 64A, the second belt ply 64B, and the third belt ply 64C have a width wider than the width of the band 70. In the radial direction, the first belt ply 64A and the second belt ply 64B are located inward of the band 70, and the third belt ply 64C and the fourth belt ply 64D are located outward of the band 70.

The tag member 26 is located axially outward of the bead 10. In the tire 2, the tag member 26 is provided only on the side of one sidewall 6. The tag member 26 may be provided on each of the side of one sidewall 6 and the side of the other sidewall 6. From the viewpoint of reducing the risk of damage, it is preferable that the tag member 26 is provided only on the side of one sidewall 6 out of the pair of sidewalls 6.

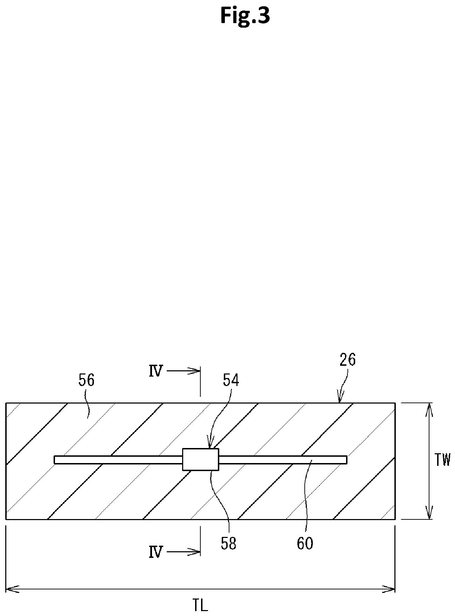

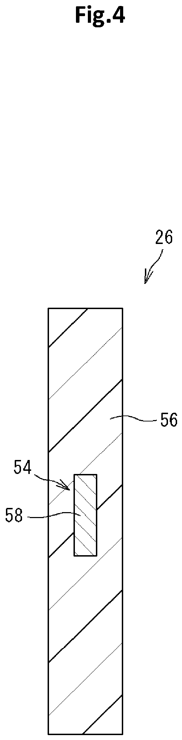

FIG. 3 is a plan view of the tag member 26. FIG. 4 is a cross-sectional view taken along a line IV-IV in FIG. 3.

The tag member 26 has a plate shape. The tag member 26 is long in a length direction thereof and short in a width direction thereof. As shown in FIG. 1, in the tire 2, the tag member 26 is placed such that a first end 26s in the length direction thereof is located on the radially outer side in the tire 2 and a second end 26u in the length direction thereof is located on the radially inner side in the tire 2. In the tire 2, the first end 26s is also referred to as outer end, and the second end 26u is also referred to as inner end.

The tag member 26 includes the RFID tag 54. In FIG. 3, for convenience of description, the RFID tag 54 is shown by a solid line, but the entirety thereof is covered with a protector 56. The tag member 26 includes the RFID tag 54 and the protector 56. The RFID tag 54 is located at the center of the tag member 26. The protector 56 is formed from a crosslinked rubber. The protector 56 has stiffness substantially equal to the stiffness of the outer apex 42. In the tire 2, formation of a good communication environment is considered, and a crosslinked rubber having high electrical resistance is used for the protector 56. The protector 56 is formed from a rubber that has high insulation properties.

Although not described in detail, the RFID tag 54 is a small and lightweight electronic component that includes: a semiconductor chip 58 obtained by making a transmitter/receiver circuit, a control circuit, a memory, etc., into a chip; and an antenna 60. Upon receiving interrogation radio waves, the RFID tag 54 uses the radio waves as electrical energy and transmits various data in the memory as response radio waves. The RFID tag 54 is a type of passive radio frequency identification transponder.

In the RFID tag 54, the antenna 60 extends in the length direction of the RFID tag 54 (the right-left direction in FIG. 3) from the semiconductor chip 58. As shown in FIG. 3, the RFID tag 54 includes a pair of such antennas 60 provided so as to extend in the length direction thereof, and the semiconductor chip 58 located between the pair of antennas 60. In the tag member 26, the RFID tag 54 is placed such that the length direction of the RFID tag 54 coincides with the length direction of the tag member 26.

The shape of each antenna 60 shown in FIG. 3 is an example, and each antenna 60 included in the RFID tag 54 can take various shapes. The shape of each antenna 60 may be, for example, a shape extending while bending, a helical shape, or the like.

In the embodiment of the present invention, the external dimensions (length, width, and thickness) of the RFID tag 54 are represented as the length, width, and thickness of the circumscribed rectangular parallelepiped of the RFID tag 54. The length of the RFID tag 54 is equal to or larger than the width of the RFID tag 54. The width of the RFID tag 54 is equal to or larger than the thickness of the RFID tag 54.

In addition, in the embodiment of the present invention, the length direction of the RFID tag 54 is also the length direction of the antennas 60 included in the RFID tag 54. In other words, the length direction of the antennas 60 is the length direction of the RFID tag 54.

The tag member 26 is a plate-shaped member in which the RFID tag 54 is covered with a crosslinked rubber (protector). From the viewpoint of reducing the risk of damage to the RFID tag 54 and forming a good communication environment, the thickness of the tag member 26 in the tire 2 is preferably not less than 1.0 mm and not greater than 2.5 mm. The thickness of the tag member 26 in the tire 2 is represented as the maximum thickness of the tag member 26 at the semiconductor chip 58 of the RFID tag 54.

A length TL of the tag member 26 before embedding in the tire 2 is not less than 60 mm and not greater than 80 mm, and a width TW thereof is not less than 10 mm and not greater than 20 mm.

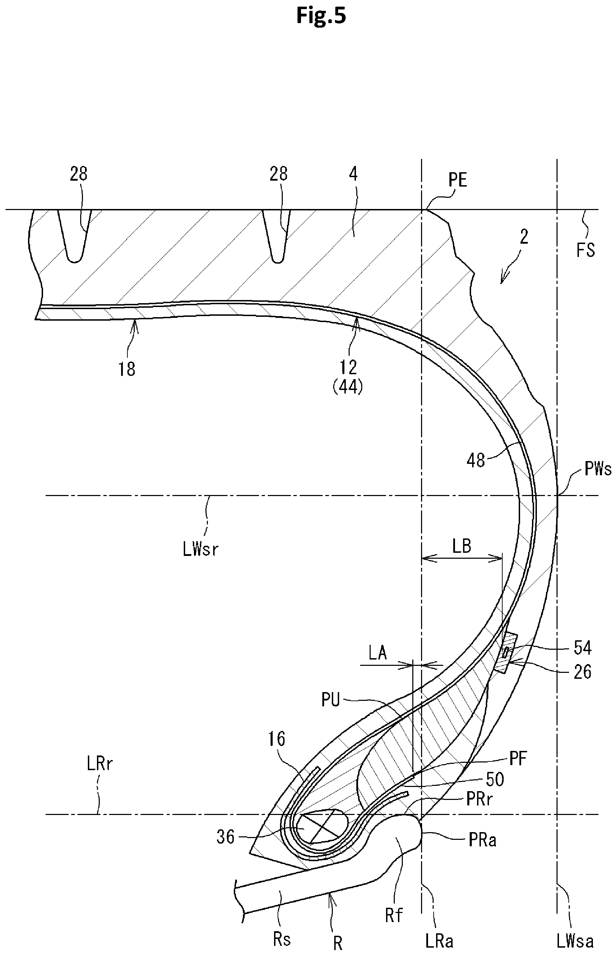

FIG. 5 shows a part of a meridian cross-section of the tire 2 in a ground-contact state. The cross-section in FIG. 5 is a trace of a cross-sectional image of the tire 2 taken, for example, by a computer tomography method using X-rays (hereinafter referred to as X-ray CT method) in a state where a load that is 50% of the standardized load is applied to the tire 2 in the standardized state and the tire 2 is brought into contact with a flat surface FS.

In the present invention, the state where a load that is 50% of the standardized load is applied to the tire 2 in the standardized state and the tire 2 is brought into contact with the flat surface FS is also referred to as standard ground-contact state.

In the standard ground-contact state shown in FIG. 5, the camber angle of the tire 2 is set to 0 degrees.

In FIG. 5, a position indicated by reference character PRa is an axially outer end of a flange Rf of the rim R. An alternate long and short dash line indicated by reference character LRa is a straight line passing through the axially outer end PRa and extending in the radial direction.

A position indicated by reference character PRr is a radially outer end of the flange Rf. An alternate long and short dash line indicated by reference character LRr is a straight line passing through the radially outer end PRr and extending in the axial direction.

In FIG. 5, a position indicated by reference character PWs is the maximum width position of the tire 2 in the standard ground-contact state. An alternate long and short dash line indicated by reference character LWsa is a straight line passing through the maximum width position PWs and extending in the radial direction. An alternate long and short dash line indicated by reference character LWsr is a straight line passing through the maximum width position PWs and extending in the axial direction.

In FIG. 5, the tire 2 is shown in a simplified manner, and some of the components of the tire 2 shown in FIG. 1, such as the reinforcing layer 20, are omitted.

As shown in FIG. 5, in the tire 2 in the standard ground-contact state, the RFID tag 54 is located outward of the radially outer end PRr of the rim R in the radial direction. Therefore, radio waves are not blocked by the rim R, and the performance in reading data from the RFID tag 54 is good. In the standard ground-contact state, it is preferable that the RFID tag 54 is located inward of the maximum width position PWs of the tire 2 in the radial direction. In this case, the RFID tag 54 is placed at a position where bending is less likely to occur during running, so that the RFID tag 54 itself is less likely to be damaged and damage to the tire 2 starting from the location where the RFID tag 54 is placed is also less likely to occur.

In the present invention, the fact that the RFID tag 54 is located outward of the radially outer end PRr of the rim R means that the entire semiconductor chip 58 of the RFID tag 54 is located outward of the radially outer end PRr of the rim R. In addition, the fact that the RFID tag 54 is located inward of the maximum width position PWs of the tire 2 means that the entire semiconductor chip 58 of the RFID tag 54 is located inward of the maximum width position PWs of the tire 2.

Moreover, in the tire 2 in the standard ground-contact state, in the axial direction, the RFID tag 54 is located outward of the axially outer end PRa of the rim R, and the end PF of the turned-up portion 50 is located inward of the axially outer end PRa of the rim R. In this case, the RFID tag 54 and the end PF of the turned-up portion 50 are located away from each other in the axial direction. Therefore, an increase in strain in the vicinity of the end PF of the turned-up portion 50, which may occur due to the RFID tag 54, foreign matter for the tire, being close to the end PF, can be suppressed.

In the present invention, the fact that the RFID tag 54 is located outward of the axially outer end PRa of the rim R means that the entire semiconductor chip 58 of the RFID tag 54 is located outward of the axially outer end PRa of the rim R.

From the above-described viewpoint, the mounting position of the tag member 26 mounted on the tire 2 is preferably a position at which the entire semiconductor chip 58 of the RFID tag 54 is included in a region surrounded by the alternate long and short dash lines LWsr and LWsa and the alternate long and short dash lines LRr and LRa in the standard ground-contact state.

Furthermore, in the tire 2, the RFID tag 54 is placed away from the vicinity of the end of the flange Rf and the vicinity of the maximum width position PWs where large strain may occur if the RFID tag 54 is present therein. In the tire 2, promotion of an increase in strain by the presence of the RFID tag 54 is suppressed.

In the tire 2, occurrence of damage due to the presence of the RFID tag 54 is suppressed. Moreover, damage to the RFID tag 54 itself is also suppressed.

In the tire 2, even though the RFID tag 54 is incorporated therein, good durability is maintained.

In FIG. 5, a double-headed arrow LA indicates the distance in the axial direction between the end PF of the turned-up portion 50 and the axially outer end PRa of the rim R. A double-headed arrow LB indicates the distance in the axial direction between the RFID tag 54 and the axially outer end PRa of the rim R. Here, the distance LB in the axial direction between the RFID tag 54 and the axially outer end PRa of the rim R is the shortest distance in the axial direction between the semiconductor chip 58 of the RFID tag 54 and the axially outer end PRa of the rim R.

In the tire 2, it is preferable that the distance LA in the axial direction and the distance LB in the axial direction satisfy LA < LB. As already described, in order to ensure the reading performance of the RFID tag 54 while suppressing an increase in strain in the vicinity of the end PF of the turned-up portion 50, it is preferable that the distance in the axial direction between the end PF of the turned-up portion 50 and the RFID tag 54 is large, but from the viewpoint of more easily ensuring the reading performance of the RFID tag 54, it is more preferable that the RFID tag 54 is far away from the rim R in the axial direction.

From the above-described viewpoint, the distance LB in the axial direction is more preferably not less than 1.5 times and not greater than 8.0 times the distance LA in the axial direction.

The tire 2 is a tire in which, in the standard ground-contact state shown in FIG. 5, the end PE of the tread surface 24 is located axially outward of the alternate long and short dash line indicated by reference character LRa.

The tire 2 is a tire in which, in the standard ground-contact state shown in FIG. 5, the outer end PU of the inner apex 40 is located axially inward of the alternate long and short dash line indicated by reference character LRa.

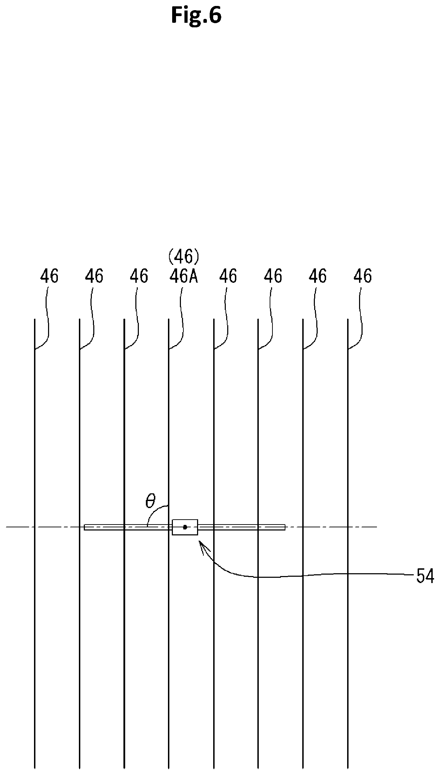

FIG. 6 illustrates an angle formed between the length direction of the RFID tag 54 and the carcass cord. FIG. 6 illustrates the positional relationship between the RFID tag 54 and the carcass cords when a part of the tire 2 is viewed in the axial direction. Therefore, in FIG. 6, the direction penetrating the drawing sheet thereof is the axial direction of the tire 2. As the angle formed between the length direction of the RFID tag 54 and the carcass cord, an angle on the acute side is adopted, except when this angle is 90 degrees.

In the tire 2, the RFID tag 54 is mounted in a predetermined orientation. Specifically, an angle θ formed between a carcass cord 46 included in the carcass 12 and the length direction of the RFID tag 54 is not less than 80 degrees and not greater than 90 degrees.

In the tire 2, an organic fiber cord is adopted as each carcass cord 46. In a tire in which an organic fiber cord is used as each carcass cord 46, each sidewall portion of the tire bends more easily than in a tire in which a steel cord is used as each carcass cord. Therefore, in the case where the RFID tag 54 is mounted to the tire in which an organic fiber cord is used as each carcass cord, depending on the orientation of the RFID tag 54, the RFID tag 54 is likely to be significantly influenced by bending of the sidewall portion and may be easily damaged.

Under such circumstances, if the RFID tag 54 is placed such that the angle formed between the length direction thereof and the carcass cord 46 is close to 90 degrees, the above-described influence of bending on the RFID tag 54 can be reduced.

Therefore, in the tire 2, the angle θ formed between the length direction of the RFID tag 54 and the carcass cord 46 is set to be not less than 80 degrees and not greater than 90 degrees.

It is more preferable if the angle θ is closer to 90 degrees.

Here, the angle θ means the angle formed between the length direction of the RFID tag 54 and a carcass cord 46A closest to the center of the semiconductor chip 58 of the RFID tag 54 when the tire 2 is viewed in the axial direction.

The center of the semiconductor chip 58 when the tire 2 is viewed in the axial direction means the center of the circumscribed rectangle of the semiconductor chip 58 (the point of intersection of the diagonals of the circumscribed rectangle) when viewed in the axial direction.

In FIG. 1, a length indicated by a double-headed arrow t is the shortest distance from the outer surface of the tire 2 to the RFID tag 54. The shortest distance t is the thickness of the rubber covering the RFID tag 54.

In the tire 2, the shortest distance t is preferably not less than 3.5 mm. Accordingly, the RFID tag 54 is covered with rubber having a sufficient thickness. In the tire 2, promotion of an increase in strain by the presence of the RFID tag 54 is effectively suppressed. In the tire 2, occurrence of damage due to the presence of the RFID tag 54 is effectively suppressed. From this viewpoint, the shortest distance t is more preferably not less than 4.0 mm. The upper limit of the shortest distance t depends on the position of the RFID tag 54, and thus a preferable upper limit of the shortest distance t is not set.

In the tire 2, it is preferable that the tag member 26 is located axially outward of the outer apex 42 on the radially outer side of the end PF of the turned-up portion 50. In this case, the tag member 26 is in contact with the outer apex 42. The boundary between the tag member 26 and the outer apex 42 forms a part of the outer surface of the outer apex 42. In other words, the boundary between the tag member 26 and the outer apex 42 forms a part of the outer surface of the apex 38.

In the tire 2, the RFID tag 54 is located between the outer end PG2 of the outer apex 42 and the end PF of the turned-up portion 50 in the radial direction.

The RFID tag 54 of the tire 2 is placed in the bead portion where the degree of bending is small. In the tire 2, the risk of damage to the RFID tag 54 is low.

In the tire 2, since the outer apex 42, which is softer than the inner apex 40, is located axially inward of the RFID tag 54, promotion of an increase in strain by the presence of the RFID tag 54 is effectively suppressed. In the tire 2, occurrence of damage due to the presence of the RFID tag 54 is suppressed. Moreover, damage to the RFID tag 54 itself is also suppressed. In the tire 2, even though the RFID tag 54 is incorporated therein, good durability is maintained.

From the viewpoint of maintaining good durability while achieving formation of a good communication environment and reduction of the risk of damage to the RFID tag 54, it is preferable that the tag member 26 is in contact with the outer apex 42 on the radially outer side of the end PF of the turned-up portion 50, and the RFID tag 54 is located between the outer end PG2 of the outer apex 42 and the end PF of the turned-up portion 50 in the radial direction. From the same viewpoint, it is more preferable that the RFID tag 54 is located between the outer end PG2 of the outer apex 42 and the outer end PB of the chafer 8 in the radial direction.

In the tire 2, it is preferable that the entire tag member 26 is located radially outward of the outer end PB of the chafer 8. The interference of the tag member 26 with the outer end PB of the chafer 8 is effectively suppressed, so that waving (i.e., creasing) of the outer end PB of the chafer 8 is effectively suppressed. Promotion of an increase in strain by the presence of the RFID tag 54 is effectively suppressed. In the tire 2, occurrence of damage due to the presence of the RFID tag 54 is suppressed. Moreover, damage to the RFID tag 54 itself is also suppressed. In the tire 2, even though the RFID tag 54 is incorporated therein, good durability is maintained.

In the tire 2, it is preferable that the entire tag member 26 is located radially inward of the outer end PG2 of the outer apex 42. Accordingly, the influence of the tag member 26 on bending of the sidewall portion is effectively suppressed. In the tire 2, good durability and ride comfort are maintained. From this viewpoint, it is preferable that the outer end 26s of the tag member 26 is located radially inward of the outer end PG2 of the outer apex 42.

In the tire 2, it is preferable that the outer end PU of the inner apex 40 is located between the end PF of the turned-up portion 50 and the RFID tag 54 in the radial direction. Accordingly, the hard inner apex 40 effectively increases the stiffness of the bead portion. The strain acting on the RFID tag 54 is effectively reduced. Promotion of an increase in strain by the presence of the RFID tag 54 is effectively suppressed. From this viewpoint, it is preferable that the outer end PU of the inner apex 40 is located between the end PF of the turned-up portion 50 and the RFID tag 54 in the radial direction. In this case, from the viewpoint of being able to more effectively suppress promotion of an increase in strain by the presence of the RFID tag 54, it is more preferable that the outer end PU of the inner apex 40 is located between the end PF of the turned-up portion 50 and the RFID tag 54 in the radial direction, and further the outer end PU of the inner apex 40 is located between the end PF of the turned-up portion 50 and the outer end PB of the chafer 8 in the radial direction.

The tire 2 described so far is a heavy duty tire in which, in each bead portion, the end PF of the turned-up portion 50 is located axially outward of the apex 38, but the structure of each bead portion in the heavy duty tire according to the embodiment of the present invention is not limited to such a structure.

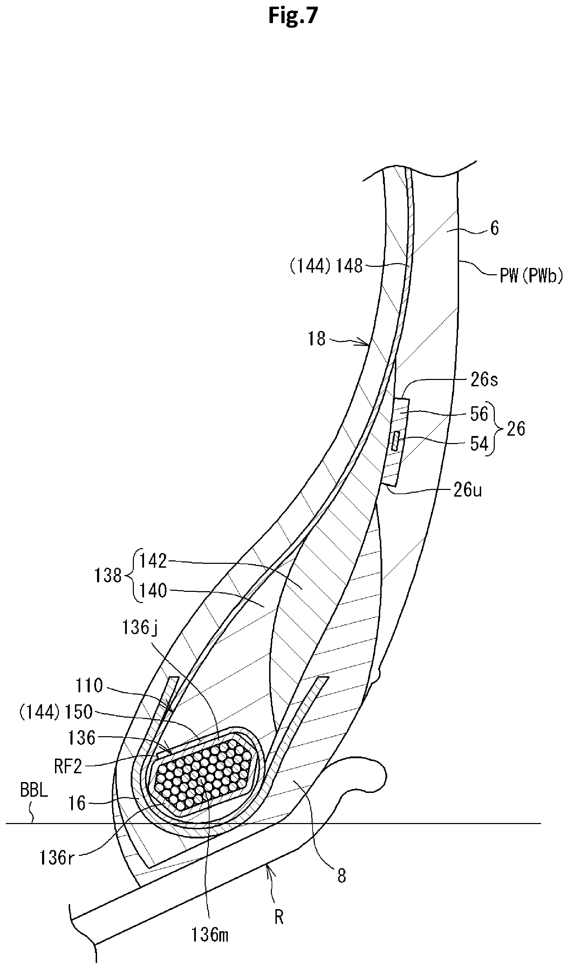

FIG. 7 is a cross-sectional view showing a part of a heavy duty tire 102 (hereinafter referred to as tire 102) according to another embodiment of the present invention.

The tire 102 has the same configuration as the tire 2, except that the position of the end of the turned-up portion of the carcass ply in each bead portion is different. In FIG. 7, components other than a carcass ply 144 and a bead 110 are designated by the same reference characters as in FIG. 2.

The bead portion of the tire 102 shown in FIG. 7 has a structure in which: a turned-up portion 150 of the carcass ply 144 is wound around a core 136 substantially in a single turn while being turned up from the inner side toward the outer side in the axial direction on the radially inner side of the bead 110; and an end RF2 of the turned-up portion 150 along a radially upper surface 136j of the core 136 is interposed between the core 136 and an apex 138 (sometimes referred to as a bead-winding structure). In the tire 102, the apex 138 has an inner apex 140 and an outer apex 142, and the end RF2 of the turned-up portion 150 is interposed between the radially upper surface 136j of the core 136 (wrapping layer 136r) and the inner apex 140.

In FIG. 7, reference character 136m denotes a core body, and reference character 148 denotes a ply body.

In the tire 102, the end RF2 of the turned-up portion 150 is interposed between the core 136 and the inner apex 140 which are harder than the outer apex 142 and the chafer 8. Therefore, in the tire 102, strain in the vicinity of the end RF2 of the turned-up portion 150 is particularly less likely to occur.

In the tire 102, an organic fiber cord, which is more flexible than a steel cord, is adopted as each carcass cord. Therefore, in the tire 102, strong bending back of each turned-up portion (so-called spring back) in a green tire molding process or the like, which is likely to occur in the case where a steel cord is adopted as each carcass cord in a tire having a bead-winding structure, is less likely to occur.

In the tire 102 in which an organic fiber cord is adopted as each carcass cord, since the above-described spring back is less likely to occur, problems of molding defects such as formation of cavities in bead portions in a green tire molding process are less likely to occur.

In the tire 102, the tag member 26 having the RFID tag 54 is mounted at a predetermined position as in the tire 2. Therefore, the tire 102 is also a heavy duty tire having good performance in reading data from an RFID tag and having good durability.

In the tire 102, the core 136 may be further coated with a vulcanized rubber layer around the wrapping layer 136r.

As is obvious from the above description, according to the present invention, the heavy duty tire 2 which has good performance in reading data from an RFID tag and has good durability, is obtained.

The above-described technology can be applied when mounting RFID tags to various tires.

### [Additional Note]

The present invention includes aspects described below.
[1] A heavy duty tire including:
   a tread;
   a pair of sidewalls each connected to an end of the tread and located radially inward of the tread;
   a pair of beads each located radially inward of the sidewall;
   a carcass located inward of the tread and the pair of sidewalls and extending on and between one bead and the other bead;
   a belt stacked on the carcass on a radially inner side of the tread;
   a pair of chafers each located radially inward of the sidewall and configured to come into contact with a rim; and
   a tag member including an RFID tag, wherein
   the bead includes a core and an apex located radially outward of the core,
   the carcass includes a carcass ply including a plurality of carcass cords aligned with each other,
   the carcass cords are formed from an organic fiber,
   the carcass ply includes a ply body extending between the pair of beads and a pair of turned-up portions each connected to the ply body and turned up around the bead,
   the rim is a standardized rim,
   a state where the tire is fitted on the rim and an internal pressure of the tire is adjusted to a standardized internal pressure is a standardized state,
   a state where a load that is 50% of the standardized load is applied to the tire in the standardized state and the tire is brought into contact with a flat surface is a standard ground-contact state,
   in the standard ground-contact state, an end of the turned-up portion is located inward of an axially outer end of the rim in an axial direction,
   in the standard ground-contact state, the RFID tag is located outward of the axially outer end of the rim in the axial direction and is located outward of a radially outer end of the rim in a radial direction, and
   an angle formed between a length direction of the RFID tag and the carcass cord is not less than 80 degrees and not greater than 90 degrees.
[2] The heavy duty tire according to [1] above, wherein the carcass cords are formed from an aramid fiber.
[3] The heavy duty tire according to [1] or [2] above, wherein the RFID tag is located inward of a maximum width position of the tire in the radial direction in the standard ground-contact state.
[4] The heavy duty tire according to any one of [1] to [3] above, further comprising a band located between the tread and the belt in the radial direction and having two ends opposed to each other across an equator plane.
[5] The heavy duty tire according to any one of [1] to [4] above, wherein the end of the turned-up portion is interposed between the core and the apex.
[6] The heavy duty tire according to any one of [1] to [4] above, wherein
   the end of the turned-up portion is located axially outward of the apex, and
   a distance LB in the axial direction between the RFID tag and the axially outer end of the rim in the standard ground-contact state is longer than a distance LA in the axial direction between the end of the turned-up portion and the axially outer end of the rim in the standard ground-contact state.

## Claims

1. A heavy duty tire (2, 102) comprising:
a tread (4);
a pair of sidewalls (6) each connected to an end of the tread (4) and located radially inward of the tread (4);
a pair of beads (10, 110) each located radially inward of the sidewall (6);
a carcass (12) located inward of the tread (4) and the pair of sidewalls (6) and extending on and between one bead (10, 110) and the other bead (10, 110);
a belt (62) stacked on the carcass (12) on a radially inner side of the tread (4);
a pair of chafers (8) each located radially inward of the sidewall (6) and configured to come into contact with a rim (R); and
a tag member (26) including an RFID tag (54), wherein
the bead (10, 110) includes a core (36, 136) and an apex (38, 138) located radially outward of the core (36, 136),
the carcass (12) includes a carcass ply (44, 144) including a plurality of carcass cords (46, 46A) aligned with each other,
the carcass cords (46, 46A) are formed from an organic fiber,
the carcass ply (44, 144) includes a ply body (48, 148) extending between the pair of beads (10, 110) and a pair of turned-up portions (50, 150) each connected to the ply body (48, 148) and turned up around the bead (10, 110),
the rim (R) is a standardized rim,
a state where the tire (2, 102) is fitted on the rim (R) and an internal pressure of the tire (2, 102) is adjusted to a standardized internal pressure is a standardized state,
a state where a load that is 50% of the standardized load is applied to the tire (2, 102) in the standardized state and the tire (2, 102) is brought into contact with a flat surface (FS) is a standard ground-contact state,
in the standard ground-contact state, an end (PF) of the turned-up portion (50, 150) is located inward of an axially outer end (PRa) of the rim (R) in an axial direction,
in the standard ground-contact state, the RFID tag (54) is located outward of the axially outer end (PRa) of the rim (R) in the axial direction and is located outward of a radially outer end (PRr) of the rim (R) in a radial direction, and
an angle (0) formed between a length direction of the RFID tag (54) and the carcass cord (46A) is not less than 80 degrees and not greater than 90 degrees.

2. The heavy duty tire (2, 102) according to claim 1, wherein the carcass cords (46, 46A) are formed from an aramid fiber.

3. The heavy duty tire (2, 102) according to claim 1 or 2, wherein the RFID tag (54) is located inward of a maximum width position (PWs) of the tire (2, 102) in the radial direction in the standard ground-contact state.

4. The heavy duty tire (2, 102) according to any one of claims 1 to 3, further comprising a band (70) located between the tread (4) and the belt (62) in the radial direction and having two ends (70e) opposed to each other across an equator plane (CL).

5. The heavy duty tire (2, 102) according to any one of claims 1 to 4, wherein the end (PF) of the turned-up portion (50, 150) is interposed between the core (36, 136) and the apex (38, 138).

6. The heavy duty tire (2) according to any one of claims 1 to 4, wherein
the end (PF) of the turned-up portion (50) is located axially outward of the apex (38), and
a distance LB in the axial direction between the RFID tag (54) and the axially outer end (PRa) of the rim (R) in the standard ground-contact state is longer than a distance LA in the axial direction between the end (PF) of the turned-up portion (50) and the axially outer end (PRa) of the rim (R) in the standard ground-contact state.
